Europäisches Patentamt

European Patent Office

Office européen des brevets

(11) Numéro de publication : **0 004 487**
**B1**

(12) # FASCICULE DE BREVET EUROPÉEN

(45) Date de publication du fascicule du brevet :
19.05.82

(51) Int. Cl.³ : **F 16 H 37/02**

(21) Numéro de dépôt : **79400102.4**

(22) Date de dépôt : **21.02.79**

(54) Transmission à variateur.

(30) Priorité : 16.03.78 FR 7807643

(43) Date de publication de la demande :
.03.10.79 (Bulletin 79/20)

(45) Mention de la délivrance du brevet :
19.05.82 Bulletin 82/20

(84) Etats contractants désignés :
**DE GB IT NL**

(56) Documents cités :
**FR - A - 1 173 510**
**FR - A - 1 219 000**
**FR - A - 1 268 226**
**FR - A - 1 432 631**
**US - A - 3 686 967**

**J. STUPER « Automatische Automobilgetriebe »,
page 51, édité 1965, SPRINGER VERLAG**

(73) Titulaire : **REGIE NATIONALE DES USINES RENAULT
Boîte postale 103 8-10 avenue Emile Zola
F-92109 Boulogne-Billancourt (FR)**

(72) Inventeur : **Piret, Jean
12, quai Boissy d'Anglas
F-78380 Bougival (FR)**

Imprimerie Jouve, 18, rue St-Denis, 75001 Paris, France

EP 0 004 487 B1

Transmission à variateur

La présente invention concerne une transmission pour véhicules automobiles et se rapporte plus particulièrement à un groupe de transmission comprenant un ensemble variateur et différentiel utilisé en combinaison avec un moteur à combustion interne. L'axe commun du moteur et de l''arbre primaire du variateur ainsi que l'axe de son arbre secondaire sont le plus souvent disposés transversalement à l'axe longitudinal du véhicule.

Bien que de nombreuses améliorations aient été apportées à ce type de transmission, des inconvénients défavorables à l'économie d'énergie subsistent encore. Pour des questions d'encombrement, de prix et de rendement de la transmission, les variateurs ont habituellement une plage de rapports de l'ordre de 4 : 1 ou 5 : 1 alors que la plage de rapports devrait être de l'ordre de 6 : 1 à 8 : 1. En effet, cette plage de rapports plus étendue permet de faire fonctionner, avec un meilleur rendement, la plupart des moteurs à combustion interne des véhicules automobiles.

En outre, la recherche de la tenue en endurance de la courroie entraîne un certain surdimensionnement pour éviter son remplacement trop fréquent et, par ailleurs, le rendement global du variateur n'est pas toujours satisfaisant.

Le but de la présente invention est donc de réaliser une transmission ayant une plage de rapports plus étendue de l'ordre de 6 : 1 à 8 : 1 tout en utilisant un variateur conçu de façon à obtenir le meilleur compromis encombrement, prix de revient et rendement.

A cet effet, l'invention a pour objet une transmission ayant les caractéristiques suivantes :

— Une branche à liaison directe à rapport constant est montée en parallèle à la branche constituée par le variateur, suivant un principe connu illustré par exemple par le brevet US-A-3 686 967.

— La branche à liaison directe peut être montée entre le variateur et le moteur ; alors que par exemple dans le brevet FR-A-1 173 510, le variateur est placé entre une réduction directe et une autre réduction qui est, du point de vue cinématique, en amont du variateur.

— La branche à liaison directe peut être montée à l'extérieur du variateur.

— Un système d'embrayage permet de passer de la branche à liaison directe à la branche du variateur et inversement sans interruption de couple aux roues.

— Les passages du variateur à la liaison directe et inversement peuvent se faire automatiquement, suivant un principe connu illustré par exemple par le brevet US-A-3 686 967.

— La liaison directe peut assurer le rapport le plus court ou le rapport le plus long suivant les différentes applications.

— Le rapport de début ou de fin de travail du variateur et celui de la liaison directe sont différents.

Une telle transmission suivant les différentes réalisations possibles de l'invention présente les avantages suivants :

— L'ensemble variateur-liaison à rapport constant donne une plage de rapports supérieure à 6 : 1, alors que la plage des rapports du variateur est limitée à 4 : 1 ou 5 : 1.

— Le variateur n'est utilisé qu'une partie du temps, ses dimensions peuvent donc être plus réduites et son prix de revient plus faible.

— Les passages du variateur à la liaison directe et inversement peuvent se faire automatiquement.

— Le rendement moyen de la transmission au cours de l'utilisation est amélioré.

D'autres caractéristiques et avantages de la présente invention ressortiront de la description qui suit de modes de réalisation donnés à titre d'exemple, en référence aux dessins annexés sur lesquels :

la figure 1 représente la chaîne cinématique d'une transmission selon l'invention dans laquelle la liaison à rapport constant assure le rapport le plus long à l'aide de pignons ;

la figure 2 représente le schéma de l'embrayage qui peut être prévu entre les poulies réceptrices du variateur de la figure 1 et l'arbre secondaire dudit variateur ;

la figure 3 représente la chaîne cinématique d'une transmission selon l'invention dans laquelle la liaison à rapport constant assure le rapport le plus court ;

la figure 4 représente le schéma d'un embrayage destiné à annuler l'action de la roue libre montée sur la liaison à rapport constant de la figure 3 ;

la figure 5 représente la chaîne cinématique d'une transmission selon le même principe que celle de la figure 3 où la liaison à rapport constant est constituée par une chaîne.

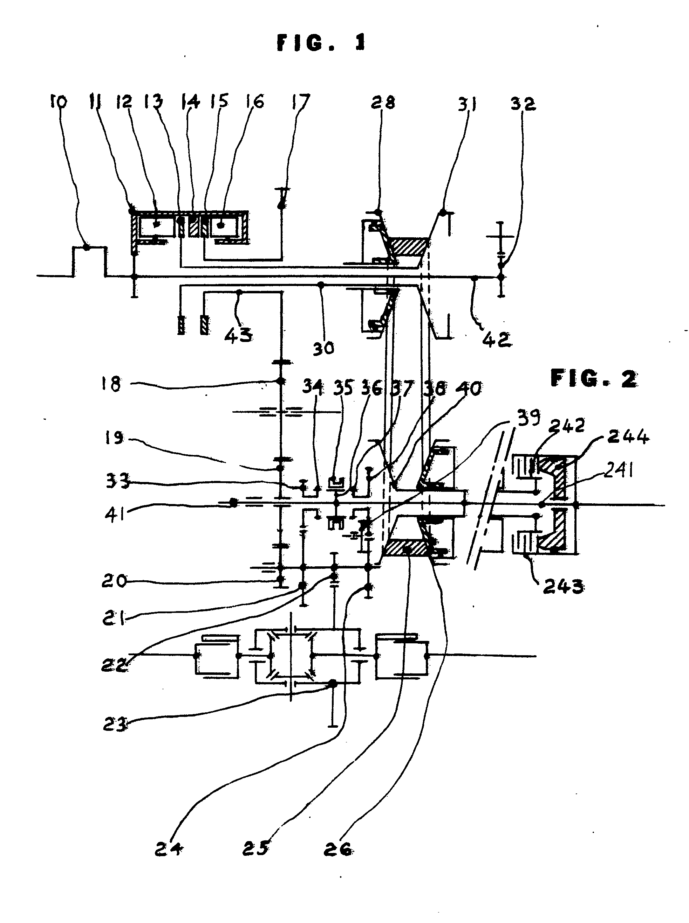

La figure 1 représente la chaîne cinématique d'une transmission qui comprend :

— un embrayage double connu en lui-même (voir par exemple la figure 43 page 51 du livre de J. STUPER « AUTOMATISCHE AUTOMOBILGETRIEBE » édité en 1965 par la SPRINGER-VERLAG), dont la cloche 11 est solidaire en rotation du vilebrequin 10 du moteur et de l'arbre de commande 42 de la pompe 32 du circuit hydraulique ; ladite cloche 11 porte dans sa partie centrale un plateau 14 sur lequel peuvent venir s'appliquer les disques d'embrayage 13 et 15 sous l'action respective des pistons 12 et 16. Le disque d'embrayage 13 est solidaire de l'arbre primaire 30 du variateur qui a un logement central dans lequel passe l'arbre de pompe 42. Le disque d'embrayage 15 est solidaire de l'arbre 43 qui est lié au pignon 17.

— Un variateur qui a une partie primaire et une partie secondaire reliées par une courroie 25 ; la partie primaire est constituée d'une poulie 31 solidaire de l'arbre primaire 30 du variateur et d'une poulie 28. La partie secondaire est constituée d'une poulie 40 solidaire de l'arbre secondaire 41 du variateur et d'une poulie 26.

— Une liaison directe à rapport constant entre l'arbre d'entrée (10) et l'arbre de sortie de la transmission qui est constituée d'un pignon 17 entraînant un pignon intermédiaire 18, lequel pignon 18 commande le pignon 19 monté fou sur l'arbre secondaire 41 du variateur, lequel pignon 19 entraîne à son tour le pignon 20 solidaire du pignon 22 de différentiel.

— Un dispositif d'inverseur qui est constitué d'un moyeu 36 solidaire de l'arbre secondaire 41 du variateur, d'un balayeur 35 qui coulisse sur ledit moyeu 36 et qui peut s'enclencher soit avec le crabot 34 du pignon 33, soit avec le crabot 37 du pignon 38 ; lesdits pignons 33 et 38 sont montés fous sur l'arbre secondaire 41 du variateur et entraînent respectivement le pignon 21 et le pignon 39 de marche arrière, lequel pignon 39 entraîne le pignon 24. Les pignons 21 et 24 sont solidaires de l'arbre du pignon 22 de différentiel.

— Un couple de commande du différentiel qui est constitué du pignon 22 commandant la couronne 23.

La transmission représentée sur la figure 1 est commandée par un circuit de régulation hydraulique qui est alimenté par la pompe 32.

L'ensemble de la commande est automatique et détermine le meilleur rapport de transmission sur la liaison à rapport constant ou sur la liaison par variateur. Cette commande agit en fonction de différents paramètres tels que la vitesse du moteur, l'angle d'ouverture du carburateur ou la vitesse du véhicule. La régulation automatique traite ces informations de façon à utiliser le moteur dans sa meilleure zone de rendement ou pour obtenir les meilleures performances d'accélération.

Dès que la vitesse du moteur a atteint une valeur limite de consigne, les poulies 28-31 se rapprochent l'une de l'autre et les poulies 40-26 s'écartent pour modifier le rapport de la transmission de façon à éviter une vitesse moteur trop élevée et à maintenir une ouverture du carburateur favorable à l'économie de carburant. Au-delà d'une certaine vitesse moteur et lorsque le rapport de transmission du variateur atteint sa valeur maximale, le disque d'embrayage 15 est serré progressivement entre le piston 16 et le plateau 14 fixé sur la cloche d'embrayage 11. La liaison directe à rapport constant est alors engagée et le variateur est mis hors service par le desserrage progressif du disque d'embrayage 13, pendant la fin du serrage du disque 15.

Le rapport de la liaison directe étant plus long (surmultipliée) que le rapport le plus long du variateur, la plage totale des rapports de la transmission est plus étendue.

A titre d'exemple, les valeurs suivantes des rapports entre les arbres primaires et secondaires peuvent être retenues pour un véhicule :

— démarrage : démultiplication maxi du variateur : 0,445

— multiplication maxi du variateur : 2,24
— liaison directe : 2,90
— rapport global : 2,90/0,445 ≃ 6,5

En marche avant, le couple du moteur est transmis par l'embrayage 13, les poulies 28-31 et 26-40, le moyeu 36, le baladeur 35, le crabot 34, les pignons 33-21 et 22 à la couronne 23 qui entraîne le différentiel.

Après enclenchement de la liaison directe, le couple n'est plus transmis par l'embrayage 13 et le variateur mais par l'embrayage 15, le pignon 17, le pignon intermédiaire 18, le pignon 19, les pignons 20, 22 et 23 qui entraînent le différentiel.

En marche arrière, l'embrayage 15 est libéré et le variateur est entraîné par l'intermédiaire de l'embrayage 13 qui rend solidaire le variateur du moteur. Le mouvement passe par le moyeu 36, le baladeur 35, le crabot 37, le pignon 38, le pignon inverseur 39, les pignons 24-22 et la couronne 23 qui entraîne le différentiel.

La figure 2 représente le schéma d'un embrayage monté entre la poulie 40 de l'arbre secondaire du variateur et cet arbre secondaire 241. Cet embrayage est principalement constitué de disques 242 solidaires de la poulie 40 et de disques 243 solidaires d'une cloche liée à l'arbre secondaire 241. Un piston 244 effectue la manœuvre de l'embrayage ou du débrayage.

Cet embrayage est maintenu serré en marche arrière et en marche avant pendant l'utilisation du variateur.

Il a pour rôle de libérer le variateur de l'arbre secondaire 241 dès que la liaison directe à rapport constant est enclenchée. De cette façon, les pertes d'énergie dues à l'entraînement à vide du variateur sont supprimées et le rendement dans la phase liaison directe est amélioré.

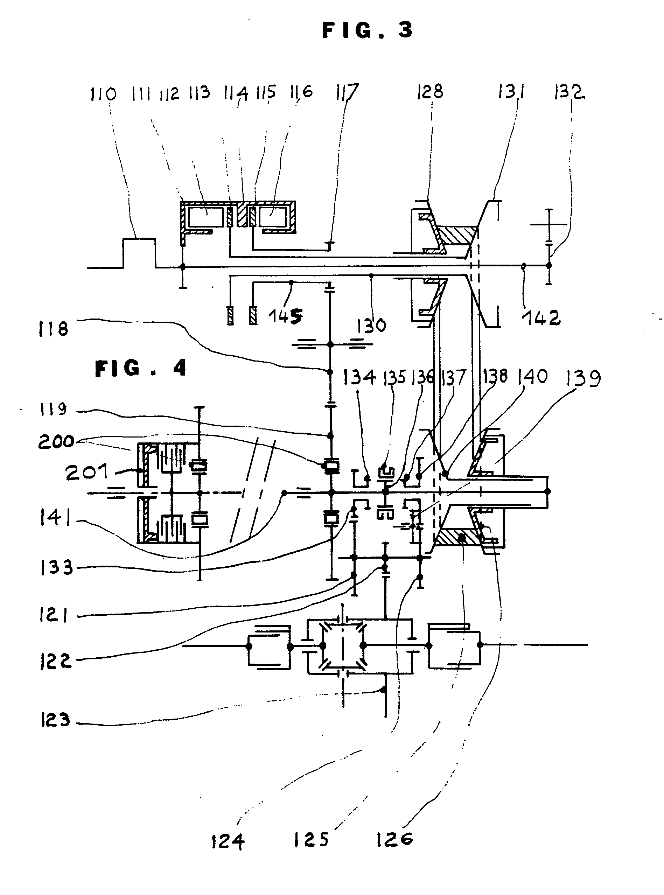

La figure 3 représente la chaîne cinématique d'une transmission basée sur le même principe que la transmission de la figure 1 mais où la liaison à rapport constant est utilisée pour le démarrage. Cette transmission comprend :

— un embrayage double qui est constitué de la même façon que celui de la figure 1 et ayant les mêmes liaisons : ledit embrayage double a une cloche 111 liée au vilebrequin 110 et à l'arbre 142 de pompe et porte un plateau 114. Ledit embrayage a des disques 113 et 115, des pistons 112 et 116. Les disques d'embrayages 113 et 115 sont respectivement solidaires de l'arbre primaire 130 du variateur et de l'arbre 145 qui est lié au pignon 117.

— Un variateur semblable à celui de la figure 1 qui est constitué d'une partie primaire comprenant une poulie 131 liée à l'arbre primaire 130 et une poulie 128 et d'une partie secondaire comprenant une poulie 126 liée à l'arbre secondaire 141 et une poulie 140, les deux parties du variateur étant reliées par une courroie 125.

— Une liaison à rapport constant qui est constituée d'un pignon 117 entraînant un pignon intermédiaire 118, lequel pignon 118 commande le pignon 119 qui est monté sur une roue libre 200

solidaire de l'arbre 141.

— Un dispositif d'inverseur semblable à celui de la figure 1 qui est constitué d'un moyeu 136 lié à l'arbre secondaire 141, d'un baladeur 135, d'un pignon 133 avec son crabot 134 et d'un pignon 138 avec son crabot 137 ; lesdits pignons 133 et 138 entraînent respectivement le pignon 121 et le pignon 139 de marche arrière, lequel pignon 139 entraîne le pignon 124. Les pignons 121 et 124 sont solidaires de l'arbre du pignon de différentiel.

— Un couple de commande du différentiel semblable à celui de la figure 1 avec un pignon 122 et une couronne 123.

Une pompe 132 semblable à celle de la figure 1 alimente un circuit de régulation hydraulique. L'ensemble de la commande automatique et la régulation sont basées sur les mêmes principes et en fonction des mêmes paramètres que ceux de la figure 1.

En marche avant, le plateau d'embrayage 115 assure l'entraînement des pignons 117-118 et 119.

La roue libre 200 entraîne l'arbre 141, le moyeu 136, le baladeur 135, le crabot 134, les pignons 133-121-122 et la couronne 123 portée par le différentiel.

Au-delà d'une certaine vitesse moteur et en fonction de la position de la pédale d'accélération, l'embrayage 113 est serré, le moteur entraîne alors les poulies 128-131 du variateur, les poulies réceptrices 126-140, l'arbre 141, le moyeu 136, le baladeur 135, le crabot 134, les pignons 135-121-122 et la couronne 123 portée par le boîtier du différentiel.

Dès la mise en service du variateur dont le rapport le plus court est plus long que le rapport de la liaison directe à rapport constant, l'arbre 141 tourne à une vitesse plus grande que le pignon 119. Pour éviter une vitesse de rotation trop élevée du pignon 117 et du disque d'embrayage 115, la roue libre se déclenche et le pignon 119 n'est plus entraîné.

En marche arrière, l'embrayage 115 transmet le couple à l'arbre 141 par les pignons 117-118 et 119 et la roue libre 200.

L'arbre 141 entraîne le moyeu 136, le baladeur 135, le crabot 137, les pignons 138-139-124-122 et la couronne 123 portée par le différentiel.

L'application de la chaîne cinématique représentée figure 3 n'est pas exclusivement limitée à une transmission ayant son rapport le plus court assuré par une liaison directe à rapport constant.

En effet, le rapport entre les pignons 117 et 119 peut être inversé et l'ensemble des pignons de renvoi situés entre l'arbre 141 et le différentiel calculé de façon à utiliser la liaison directe à rapport constant pour réaliser le rapport le plus long. Il est donc possible de passer d'une solution à l'autre avec un maximum de pièces communes.

Ladite roue libre 200 permet de passer sans à-coup de la liaison à rapport constant à la liaison par le variateur et inversement.

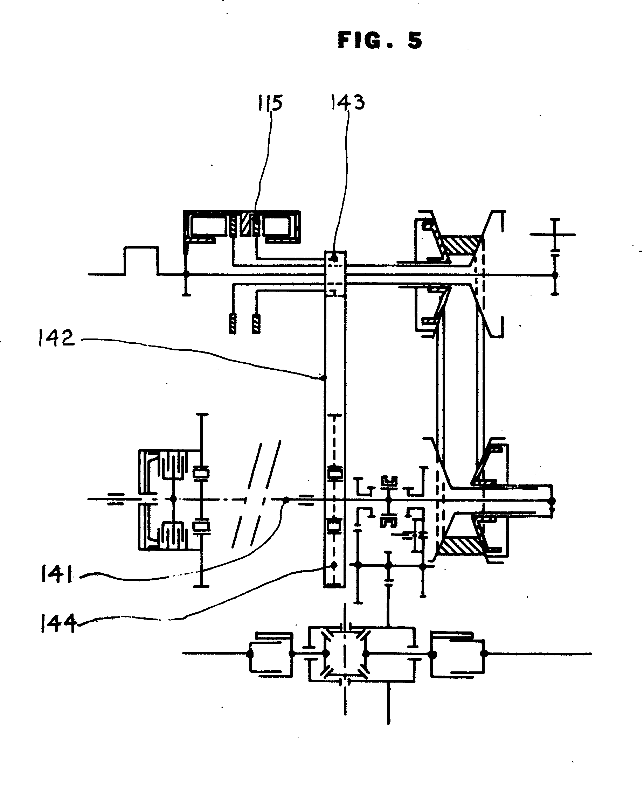

La figure 4 représente le schéma d'un embrayage 201 qui peut être monté sur le pignon 119 et qui a une architecture semblable à celui représenté sur la figure 2. Cet embrayage, quand il est fermé, relie le pignon 119 à l'arbre secondaire 141. Cet embrayage 201 élimine l'action de la roue libre, favorable aux régimes transitoires et permet d'assurer le frein moteur.

La figure 5 représente la chaîne cinématique d'une transmission selon le même principe que celle des figures 3 et 4 mais avec une liaison à rapport constant différente. Cette liaison à rapport constant est constituée d'une chaîne 142 entraînée par le pignon de chaîne 143 solidaire du disque d'embrayage 115. Ladite chaîne 142 commande le pignon 144 qui entraîne l'arbre secondaire 141.

Les figures 1 et 3 représentent des chaînes cinématiques dans lesquelles la liaison directe est placée entre le variateur et le moteur pour des questions d'architecture particulières mais il est bien évident que les positions du variateur et de la liaison directe peuvent être inversées de façon que le variateur soit situé entre la liaison directe à rapport constant et le moteur ; c'est-à-dire que l'élément d'entrée (17, 117, 143) de la liaison directe peut être situé immédiatement après la sortie de l'embrayage double, ou que les poulies motrices (28, 128 — 31, 131) du variateur peuvent être situées immédiatement après la sortie de l'embrayage double.

**Revendications**

1. Transmission à rapport de transmission variable et à rapport de transmission constant notamment pour véhicule automobile, comportant principalement un variateur constitué essentiellement d'un arbre primaire (30, 130) entraîné par le moteur, lequel arbre primaire (30, 130) porte des poulies motrices (28, 128 — 31, 131) et d'un arbre secondaire (41, 141) portant des poulies réceptrices (40, 140 — 26, 126), ledit variateur étant mis hors circuit de la transmission par enclenchement automatique d'une liaison directe à rapport constant entre l'arbre d'entrée (10) et l'arbre de sortie de la transmission et que ladite liaison directe étant mise hors circuit de la transmission par enclenchement automatique dudit variateur, lequel système d'enclenchement étant constitué par un embrayage double avec deux arbres de sortie co-axiaux (30-43, 130-143) et du même côté, lesquels arbres de sortie permettant le passage de l'arbre central d'entraînement de pompe (42, 142), caractérisée en ce que la commande automatique dudit système d'enclenchement se fait par un serrage progressif de l'embrayage à enclencher avant le desserrage de l'embrayage à déclencher ; l'une des sorties (43, 145) de l'embrayage double entraînant l'élément d'entrée (17, 117, 143) de la liaison directe, tandis que l'autre sortie (30, 130) de l'embrayage double entraîne les poulies motrices (28, 128 — 31, 131) du variateur ; l'élément d'entrée (17, 117, 143) de la liaison directe pouvant être situé immédiatement après la sortie de l'embrayage double, ou les poulies motrices (28, 128 — 31, 131) du variateur pouvant être situées immédiatement après la sortie de l'embrayage double.

2. Transmission selon la revendication 1, caractérisée en ce que la liaison directe à rapport constant est constituée d'une chaîne (142) liant deux pignons (143) et (144).

3. Transmission selon les revendications 1 et 2, caractérisée en ce que le pignon récepteur (144) de la liaison directe est monté sur une roue libre (200) solidaire de l'arbre secondaire (141).

4. Transmission selon la revendication 3, caractérisée en ce que le pignon récepteur (144) comprend un embrayage (201) qui permet de relier directement le pignon (144) à l'arbre secondaire (141) en éliminant le rôle de la roue libre (200).

5. Transmission selon la revendication 2, caractérisée en ce que le variateur est muni sur son arbre secondaire (241) d'un embrayage liant la poulie (40) à l'arbre secondaire (241).

**Claims**

1. A transmission mechanism having a variable gear ratio and a constant gear ratio, especially for an automobile, comprising mainly a speed variator constituted substantially by a primary shaft (30, 130) driven by the engine, which primary shaft (30, 130) bears driving pulleys (28, 128 — 31, 131), and a secondary shaft (41, 141) bearing driven pulleys (40, 140 — 26, 126), said variator being rendered inoperative by automatic actuation of a direct connection with a constant gear ratio between the input shaft (10) and the output shaft of the mechanism, said direct connection being rendered inoperative in said mechanism by automatic actuation of said variator, said actuating system being constituted by a double clutch having two coaxial output shafts (30-43, 130-143) mounted on the same side, which output shafts allow the central pump driving shaft (42, 142) to pass, characterized in that the automatic control of said actuating system is effected by progressively engaging the clutch to be engaged, prior to disengaging the clutch to be disengaged, one of the output elements (43, 145) of the double clutch driving the input element (17, 117, 143) of the direct connection, while the other output element (30, 130) of the double clutch drives the driving pulleys (28, 128 — 31, 131) of the variator, the input element (17, 117, 143) of the direct connection being mounted immediately behind the output element of the double clutch, or the driving pulleys (28, 128 — 31, 131) of the variator being located immediately behind the output element of the double clutch.

2. A transmission mechanism according to claim 1, characterized in that the direct connection having a constant gear ratio is constituted by a chain (142) interconnecting two pinions (143 and 144).

3. A transmission mechanism according to claims 1 and 2, characterized in that the driven pinion (144) of the direct connection is mounted on a free wheel (200) integral with the secondary shaft (141).

4. A transmission mechanism according to claim 3, characterized in that the driven pinion (144) comprises a clutch (201) allowing the pinion (144) to be connected directly to the secondary shaft (141) while putting the free wheel (200) out of function.

5. A transmission mechanism according to claim 2, characterized in that the variator is provided, on its secondary shaft (241), with a clutch connecting the pulley (40) to the secondary shaft (241).

**Ansprüche**

1. Getriebe mit veränderlichem Übersetzungsverhältnis und mit konstantem Übersetzungsverhältnis, insbesondere für einen Kraftwagen, welches Getriebe insbesondere einen Geschwindigkeitswandler besitzt, der wesentlich aus einer von dem Motor angetriebenen, Antriebsrollen (28, 128 — 31, 131) tragenden Antriebswelle (30, 130) und einer Abtriebsrollen (40, 140 — 26, 126) tragenden Abtriebswelle (41, 141) besteht, wobei dieser Geschwindigkeitswandler ausser Betrieb gesetzt wird durch automatisches Einschalten einer direkten Verbindung mit konstantem Übersetzungsverhältnis zwischen der Eingangswelle (10) und der Ausgangswelle des Getriebes, und wobei diese direkte Verbindung ausser Betrieb gesetzt wird durch automatisches Einschalten des Geschwindigkeitswechslers, während das Einschaltsystem aus einer Doppelkupplung zur Verbindung mit zwei an der gleichen Seite angeordneten koaxialen Ausgangswellen (30-43, 130-143) besteht, welch letztere den Durchlass der zentralen Pumpenantriebswelle (42, 142) gestatten, dadurch gekennzeichnet, dass die automatische Steuerung des Einschaltsystems durch ein vor dem Auskuppeln der auzukuppelnden Küpplung erfolgendes progressives Einkuppeln der einzukuppelnden Kupplung erfolgt, wobei ein Abtrieb (43, 145) der Doppelkupplung das Eingangselement (17, 117, 143) der direkten Verbindung antreibt, während der andere Abtrieb (30, 130) der Doppelkupplung die Antriebsrollen (28, 128 — 31, 131) des Geschwindigkeitswandlers antreibt, und wobei das Eingangselement (17, 117, 143) der direkten Verbindung unmittelbar hinter dem Ausgang der Doppelkupplung angeordnet sein kann, bzw, die Antriebsrollen (28, 128 — 31, 131) des Wandlers unmittelbar hinter dem Ausgang der Doppelkupplung angeordnet sein können.

2. Getriebe nach Anspruch 1, dadurch gekennzeichnet, dass die direkte Verbindung mit konstantem Übersetzungsverhältnis durch eine zwei Zahnräder (143 und 144) miteinander verbindende Kette (142) gebildet ist.

3. Getriebe nach Anspruch 1 und 2, dadurch gekennzeichnet, dass die angetriebene Rolle (144) der direkten Verbindung auf einem mit der Abtriebswelle verbundenen Freilaufrad (200) angeordnet ist.

4. Getriebe nach Anspruch 3, dadurch gekennzeichnet, dass das angetriebene Zahnrad (144) eine Kupplung (201) aufweist, die es gestattet, unter Ausschaltung der Wirkung des Freilaufrades 200) das Zahnrad (144) direkt mit der Abtriebswelle (141) zu verbinden.

5. Getriebe nach Anspruch 2, dadurch gekennzeichnet, dass der Geschwindigkeitswandler auf seiner Abtriebswelle (241) eine die Rolle (40) mit der Abtriebswelle (241) verbindende Kupplung aufweist.

# FIG. 1

# FIG. 2

# FIG. 3

# FIG. 4

# FIG. 5